(19) Europäisches Patentamt / European Patent Office / Office européen des brevets

(11) **EP 3 840 388 B1**

(12) **FASCICULE DE BREVET EUROPEEN**

(45) Date de publication et mention
de la délivrance du brevet:
**14.06.2023 Bulletin 2023/24**

(21) Numéro de dépôt: **20212468.1**

(22) Date de dépôt: **08.12.2020**

(51) Classification Internationale des Brevets (IPC):
*H04N 21/233* (2011.01)　　*H04N 21/43* (2011.01)
*H04N 21/434* (2011.01)　　*H04N 21/4363* (2011.01)
*H04N 21/439* (2011.01)　　*H04N 21/8547* (2011.01)
*H04N 21/41* (2011.01)　　*G06F 3/16* (2006.01)

(52) Classification Coopérative des Brevets (CPC):
**H04N 21/4307; G06F 3/162; H04N 21/4104;
H04N 21/4341; H04N 21/43637; H04N 21/4392;**
H04R 2420/07

(54) **EQUIPEMENT DÉCODEUR À DOUBLE LIAISON AUDIO**

DUAL AUDIO-LINK DECODER AUSRÜSTUNG

DUAL AUDIO-LINK DECODER EQUIPMENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.12.2019 FR 1914786**

(43) Date de publication de la demande:
**23.06.2021 Bulletin 2021/25**

(73) Titulaire: **SAGEMCOM BROADBAND SAS
92500 Rueil-Malmaison (FR)**

(72) Inventeur: **BOUVIGNE, Gabriel
92500 Rueil Malmaison (FR)**

(74) Mandataire: **Decorchemont, Audrey Véronique
Christèle et al
CABINET BOETTCHER
16, rue Médéric
75017 Paris (FR)**

(56) Documents cités:
**EP-A1- 1 931 140　　WO-A1-2014/055942**

**Description**

L'invention concerne le domaine de la restitution audio/vidéo via un ou des équipements de restitution.

ARRIERE PLAN DE L'INVENTION

Il est aujourd'hui très courant, dans les installations multimédia domestiques modernes, de connecter un équipement décodeur, de type boîtier décodeur STB, à un équipement de restitution audio/vidéo et à un ou plusieurs équipements de restitution audio distincts de l'équipement de restitution audio/vidéo, dans le but d'améliorer l'expérience acoustique d'un utilisateur lors de la restitution d'un contenu audio/vidéo.

Traditionnellement, l'équipement décodeur essaye de limiter au maximum la latence entre l'instant de réception d'un flux d'entrée audio/vidéo et l'instant de transmission d'un signal vidéo issu dudit flux d'entrée à destination de l'équipement de restitution audio/vidéo.

En outre, l'équipement décodeur essaye également de limiter au maximum la latence entre l'instant où un utilisateur effectue une demande d'action sur une interface de navigation (de type passer de la chaine N à la chaine N+1) et :

- l'instant où l'action est effective (par exemple le changement de chaine) afin de répondre le plus rapidement possible aux demandes de l'utilisateur,
- l'instant où un retour sonore est retranscrit afin que l'utilisateur comprenne que sa demande d'action a bien été prise en compte (par exemple un bip signalant le passage d'une chaine à une autre).

Cette fonctionnalité de retour sonore est également appelée « auditory feedback » et nécessite d'être exécutée rapidement (i.e. d'être associée à une faible latence) pour pouvoir être exploitable. En effet, elle doit par exemple permettre à un utilisateur mal voyant d'obtenir une confirmation de la prise en compte de sa demande d'action. Si la latence est trop importante, l'utilisateur pensera à tort que sa demande d'action n'est pas été prise en compte (par exemple un appui sur une touche de télécommande), et il risquera alors de réitérer sa demande (par exemple en appuyant de nouveau sur une touche), ce qui aurait pour effet d'entraîner une exécution d'une action supplémentaire non désirée.

Par ailleurs, les équipements de restitution audio additionnels actuels telles que les enceintes connectées fonctionnent aujourd'hui majoritairement par protocole sans fil (Wi-Fi, Bluetooth...) de sorte qu'il est préférable de leur associer une mémoire tampon (parfois désignée par le terme anglais de « buffer ») de taille importante afin d'être le plus robuste possible aux éventuelles perturbations de la connexion sans fil, les perturbations pouvant être d'origines diverses (perturbation liée à l'allumage d'un appareil parasitant le signal - par exemple un starter de néon -, transmission d'un signal sans fil sur un autre réseau utilisant un canal proche du canal de transmission de l'équipement décodeur considéré ...). Plus la mémoire tampon est de taille importante, meilleure sera la robustesse, mais plus grande sera la latence entre l'instant de réception d'un flux d'entrée audio/vidéo et l'instant d'émission d'un son par l'enceinte.

En conséquence, l'utilisation d'une enceinte reliée par un protocole sans-fil (Wi-Fi, Bluetooth, ...) à un équipement décodeur permettant par ailleurs de mettre en oeuvre des retours sonores conduit à des contraintes de latences antinomiques entre mémoire tampon de taille importante et émission rapide de retours sonores.

Afin de pallier ce problème il a été proposé d'avoir une latence pour les signaux audio pas trop importante (pour ne pas perturber le retour sonore) mais pas trop faible non plus (pour introduire un peu de robustesse dans la transmission sans fil). Les équipements décodeurs actuels travaillent ainsi avec une latence moyennée d'environ 300 millisecondes ce qui n'est idéal ni pour le retour sonore si pour la transmission sans fil équipement décodeur - enceinte connectée.

Le document EP 1 931 140 décrit une installation comprenant un équipement permettant de basculer le son associé à une vidéo soit sur la télévision soit sur un haut-parleur externe.

OBJET DE L'INVENTION

Un but de l'invention est de proposer un équipement décodeur permettant un meilleur compromis en termes de latence pour un retour sonore et une émission de son associé à une vidéo par une enceinte connectée sans fil.

RESUME DE L'INVENTION

En vue de la réalisation de ce but, on propose, selon l'invention, un équipement décodeur comprenant :

- une première sortie pouvant être reliée à un équipement de restitution audio,

- une deuxième sortie pouvant être reliée à un équipement de restitution vidéo,
- des moyens de traitement configurés pour transmettre via une première liaison audio de la première sortie un premier signal audio issu d'un flux d'entrée audio/vidéo réceptionné par l'équipement décodeur et, via une deuxième liaison audio, un deuxième signal audio lié à au moins un son généré par l'équipement décodeur dans un but de retour sonore afin d'interagir avec un utilisateur, la première liaison présentant des premières caractéristiques conférant au premier signal audio une première latence et la deuxième liaison présentant des deuxièmes caractéristiques conférant au deuxième signal audio une deuxième latence inférieure à la première latence,

l'équipement décodeur communiquant en service sans fil avec l'équipement de restitution audio,
la première latence étant définie par un intervalle de temps entre l'instant où les moyens de traitement réceptionnent le flux d'entrée audio/vidéo et l'instant où un son multimédia lié audit flux d'entrée audio/vidéo est diffusé par l'équipement de restitution audio,
la deuxième latence étant définie par un intervalle de temps entre l'instant où les moyens de traitement réceptionnent un ordre de génération d'un son par l'équipement décodeur et l'instant où ledit son est diffusé par l'équipement de restitution audio ou l'équipement de restitution audio/vidéo.

Ainsi l'invention permet le découpage du rendu audio en deux parties : la première générant un son en lien avec une vidéo restituée par l'équipement de restitution vidéo et la deuxième créant un retour sonore lié à au moins un son généré par l'équipement décodeur, chaque partie étant traitée par l'équipement décodeur pour être associée à des signaux audio de latences différentes. De la sorte on peut associer à la deuxième partie une plus faible latence qu'à la première et ainsi permettre une meilleure application de la fonction « retour sonore » (encore appelé « auditory feedback » par la suite).

Le au moins un son généré par l'équipement décodeur peut être de différentes origines et par exemple être généré en réponse à une demande d'action d'un utilisateur via une interface de navigation (demande de changement de chaine, lancement d'une vidéo ...) ou au lancement d'une application de type télévision interactive ou bien encore afin d'assurer une notification (par exemple volume sonore trop important, temps de visualisation trop important ...). De manière générale, le retour sonore pourra être tout son généré par l'équipement décodeur.

On retient que le son généré par l'équipement décodeur l'est dans un but de retour sonore afin d'interagir avec l'utilisateur. Le son généré par l'équipement décodeur est donc à distinguer du son issu du flux d'entrée audio/vidéo qui est éventuellement traité par l'équipement décodeur mais qui n'est pas créé par ledit équipement décodeur. Le premier signal audio et le deuxième signal audio comprennent donc des informations sonores différentes. Les moyens de traitement permettent un découpage d'un rendu audio à destination d'un utilisateur en deux parties : la première partie générant un son en lien avec une vidéo restituée par l'équipement de restitution vidéo et la deuxième partie créant un retour sonore lié au son généré par l'équipement décodeur, chaque partie étant traitée par l'équipement décodeur pour être associée à des signaux audio de latences différentes.

La première latence est définie par un intervalle de temps entre l'instant où les moyens de traitement réceptionnent le flux d'entrée audio/vidéo et l'instant où un son multimédia lié audit flux d'entrée audio/vidéo est diffusé par l'équipement de restitution audio et la deuxième latence est définie par un intervalle de temps entre l'instant où les moyens de traitement réceptionnent un ordre de génération d'un son par l'équipement décodeur et l'instant où ledit son est diffusé par l'équipement de restitution audio ou l'équipement de restitution audio/vidéo.

L'ordre de génération d'un son peut être externe à l'équipement décodeur par exemple une demande d'action d'un utilisateur via une interface de navigation (demande de changement de chaine, lancement d'une vidéo ...) et/ou interne à l'équipement décodeur par exemple en étant généré par les moyens de traitement eux-mêmes (par exemple au lancement d'une application de type télévision interactive ou bien encore afin d'assurer une notification (par exemple volume sonore trop important, temps de visualisation trop important ...) ).

Optionnellement les moyens de traitement sont configurés pour transmettre via la première liaison audio de la première sortie, le premier signal audio, et via la deuxième liaison audio de la même première sortie le deuxième signal audio.

Optionnellement les moyens de traitement sont configurés pour transmettre via la deuxième liaison audio de la deuxième sortie, le deuxième signal audio.

Optionnellement les deux liaisons audio sont configurées selon un même protocole.

Optionnellement les deux liaisons audio sont configurées par des mêmes formats de codage/décodage de signaux transitant par eux.

Optionnellement la deuxième latence est inférieure à 50 millisecondes.

Optionnellement la deuxième latence est inférieure à 30 millisecondes.

Optionnellement l'équipement est configuré pour que le signal vidéo soit désynchronisé en partie ou en totalité du deuxième signal audio.

Optionnellement l'équipement est configuré pour afficher un écran de transition durant un temps de chargement d'un signal vidéo.

Optionnellement l'écran de transition est une image figée issue du signal vidéo.

L'invention concerne également un équipement de restitution audio configuré pour être raccordé à la première sortie d'un équipement décodeur tel que précité et pour traiter les signaux provenant des deux liaisons audio transmis par ledit équipement décodeur.

L'invention concerne également un équipement décodeur et un équipement de restitution audio tels que précités. L'invention concerne également un procédé de gestion d'une double liaison sonore mis en oeuvre par un équipement décodeur tel que précité.

L'invention concerne également un programme d'ordinateur comprenant des instructions qui conduisent l'équipement décodeur tel que précité à exécuter le procédé tel que précité.

L'invention concerne également un support d'enregistrement lisible par ordinateur, sur lequel est enregistré le programme d'ordinateur tel que précité.

D'autres caractéristiques et avantages de l'invention ressortiront à la lecture de la description qui suit de modes de réalisation particuliers non limitatifs de l'invention.

BREVE DESCRIPTION DES DESSINS

L'invention sera mieux comprise à la lumière de la description qui suit en référence aux figures annexées parmi lesquelles :

[Fig. 1] la figure 1 représente schématiquement une installation comprenant un équipement décodeur selon un premier mode de réalisation de l'invention ;

[Fig. 2] la figure 2 est un diagramme de gestion du rendu audio dans l'installation illustrée à la figure 1 ;

[Fig. 3] la figure 3 illustre schématiquement la séparation du rendu vidéo par l'équipement décodeur représenté à la figure 1 ;

[Fig. 4] la figure 4 montre des affichages successifs par un équipement de restitution vidéo de l'installation illustré à la figure 1 lors d'un zapping réalisé par un utilisateur, sans intervention de l'équipement décodeur ;

[Fig. 5] la figure 5 est une image similaire à celle de la figure 4, avec une intervention de l'équipement décodeur selon une première variante ;

[Fig. 6] la figure 6 est une image similaire à celle de la figure 5, avec une intervention de l'équipement décodeur selon une deuxième variante ;

[Fig. 7] la figure 7 est une image similaire à celle de la figure 5, avec une intervention de l'équipement décodeur selon une troisième variante ;

[Fig. 8] la figure 8 illustre par une flèche temporelle les grandes étapes de mise en oeuvre de la troisième variante dont les affichages correspondants sont représentés à la figure 7 ;

[Fig. 9] la figure 9 représente schématiquement une installation comprenant un équipement décodeur selon un deuxième mode de réalisation de l'invention.

DESCRIPTION DETAILLEE DE L'INVENTION

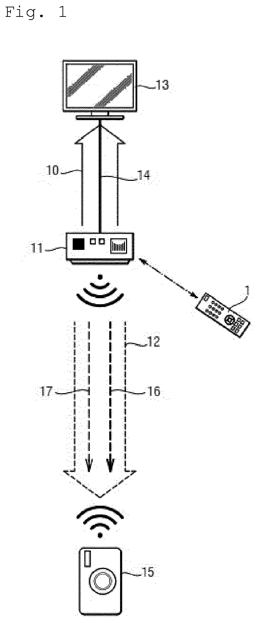

En référence à la figure 1, l'installation selon un premier mode de réalisation est une installation multimédia comprenant un équipement décodeur 11 relié ici à un équipement de restitution vidéo, qui est ici en réalité un équipement de restitution audio/vidéo 13, et à un équipement de restitution audio 15. L'équipement de restitution audio 15 n'est pas compris dans l'équipement décodeur 11 : ils forment deux entités distinctes en communication sans fil.

L'équipement décodeur 11 est ici un boîtier décodeur, l'équipement de restitution audio/vidéo 13 est une télévision, et l'équipement de restitution audio 15 est une enceinte externe.

En service, l'équipement décodeur 11 acquiert au niveau d'une interface de communication de l'équipement décodeur 11, un flux multimédia d'entrée qui peut provenir d'un ou de plusieurs réseaux de diffusion. Les réseaux de diffusion peuvent être de tout type. Par exemple, le réseau de diffusion est un réseau de télévision par satellite, et l'équipement décodeur 11 reçoit le flux multimédia d'entrée à travers une antenne parabolique. En variante, le réseau de diffusion est une connexion Internet et l'équipement décodeur 11 reçoit le flux multimédia d'entrée à travers ladite connexion Internet. Selon une autre variante, le réseau de diffusion est un réseau de télévision numérique terrestre (TNT) ou un réseau de télévision par câble. De manière globale, le réseau de diffusion peut être de source diverse : satellite, câble, IP, TNT (réseau de Télévision Numérique Terrestre), flux vidéo stocké localement ou sur un réseau informatique local (LAN), etc.

De façon particulière, le flux multimédia d'entrée réceptionné par l'équipement décodeur 11 comporte des métadonnées et un flux audio/vidéo d'entrée comprenant une partie audio et une partie vidéo qui sont synchronisées entre elles.

L'équipement décodeur 11 comporte des moyens de traitement permettant entre autres de traiter le flux d'entrée audio/vidéo.

L'équipement de restitution audio/vidéo 13 est connecté à une sortie audio/vidéo de l'équipement décodeur 11. L'équipement de restitution audio 15 est connecté à une sortie audio de l'équipement décodeur 11.

Par « sortie audio/vidéo », on entend une sortie sur laquelle l'équipement décodeur 11 applique au moins un signal audio/vidéo pour mettre en oeuvre une restitution audio et une restitution vidéo via (au moins) un équipement de restitution audio/vidéo 13 (ici la télévision). Par « sortie audio », on entend une sortie sur laquelle l'équipement décodeur 11 applique au moins un signal audio pour mettre en oeuvre une restitution audio via (au moins) un équipement de restitution audio 15 (ici l'enceinte externe).

Dans ce premier mode de réalisation, sur une même sortie audio, l'équipement décodeur 11 transmet via une première liaison audio 16 un premier signal audio et, via une deuxième liaison audio 17, un deuxième signal audio.

En conséquence, de manière correspondante, l'équipement de restitution audio 15 comporte des moyens de traitement qui lui sont propres pour traiter le premier signal audio et le deuxième signal audio transmis par l'équipement décodeur 11, signaux tous deux réceptionnés au niveau d'une interface de communication de l'équipement de restitution audio 15.

Par ailleurs, l'équipement décodeur 11 transmet via une unique liaison audio/vidéo 14 un signal audio/vidéo à l'équipement de restitution audio/vidéo 13.

Le canal de communication 10, par lequel circule la liaison audio/vidéo, entre l'équipement décodeur 11 et l'équipement de restitution audio/vidéo 13 peut être filaire ou sans fil. Tout type de technologie peut être utilisé pour réaliser ce canal 10 : optique, radioélectrique, etc. Le canal 10 peut ainsi avoir différentes natures « physiques » (par exemple en HDMI, *Toslink,* RCA, etc.) et/ou utiliser différents protocoles « informatiques » (par exemple en *Bluetooth,* UPnP, *Airplay, Chromecast,* Wifi, etc).

Le canal de communication 12 entre l'équipement décodeur 11 et l'équipement de restitution audio 15, par lequel circulent la première liaison audio 16 et la deuxième liaison audio 17, est non filaire. Tout type de technologie peut être utilisé pour réaliser ce canal 12 : optique, radioélectrique, etc. Le canal 12 peut ainsi utiliser différents protocoles « informatiques » (par exemple en *Bluetooth,* UPnP, *Airplay, Chromecast,* Wifi, etc).

Ainsi et selon une option non limitative, l'équipement de restitution audio/vidéo 13 est en relation HDMI (i.e. le canal de communication 10 est un câble HDMI) avec l'équipement décodeur 11 et l'équipement de restitution audio 15 est connecté par un réseau local à l'équipement décodeur 11. Le réseau local est par exemple un réseau sans fil de type Wi-Fi (i.e. le canal de communication 12 est un lien Wi-Fi). Selon une autre variante, le réseau local comporte un routeur Wi-Fi, l'équipement décodeur 11 est relié audit routeur Wi-Fi par une connexion filaire de type Ethernet, et le routeur Wi-Fi est connecté à l'équipement de restitution audio 15 par une connexion sans fil de type Wi-Fi.

On retient donc que dans l'installation, deux liaisons audio différentes 16, 17 (entre l'équipement décodeur 11 et l'équipement de restitution audio 15) passent par un même canal de communication 12. Avec un même ensemble émetteur-récepteur on assure ainsi deux liaisons audio différentes 16, 17 entre l'équipement décodeur 11 et l'équipement de restitution audio 15. Ainsi on émet du son provenant de deux liaisons audio 16, 17 par un seul équipement de restitution audio 15.

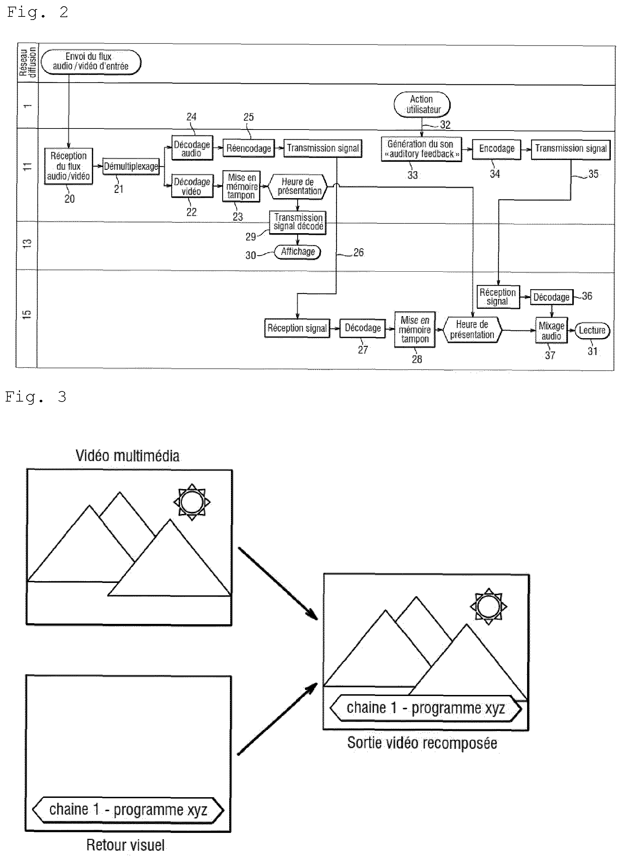

On va à présent s'attacher à décrire le fonctionnement de l'équipement décodeur 11 en référence aux figures 1 et 2. En ce qui concerne le rendu audio, l'équipement décodeur 11 distingue deux parties :

- le retour sonore lié aux sons générés par l'équipement décodeur (par exemple suite à une demande d'action requise par l'utilisateur via une interface de navigation 1);
- le son multimédia pour la restitution du flux audio d'entrée.

L'interface de navigation 1 est dans le cas présent une télécommande mais cela pourrait être également une manette, un joystick ... Le retour sonore peut par exemple être l'émission d'un bip à chaque fois que l'utilisateur appuie sur l'une des touches de la télécommande.

En service l'équipement décodeur 11 réceptionne 20 le flux d'entrée audio/vidéo qui est ensuite découpé 21 en un signal audio et un signal vidéo. Le signal vidéo est décodé 22 puis le signal correspondant « vidéo multimédia » est mis en mémoire tampon 23 dans l'équipement décodeur 11. En revanche, le signal audio est décodé 24 en un signal « son multimédia » puis ré-encodé 25 et transmis 26 à l'équipement de restitution audio 15 par liaison sans fil avant d'être de nouveau décodé 27 par ledit équipement de restitution audio 15 puis mis en mémoire tampon 28 dans l'équipement de restitution audio 15. Afin d'assurer une synchronisation entre le signal « vidéo multimédia » et le signal « son multimédia », les données en mémoire tampon sont déchargées simultanément à une heure de présentation donnée : le signal « vidéo multimédia » est transmis 29 à l'équipement de restitution audio/vidéo 13 pour affichage 30 et le signal « son multimédia » est diffusé 31 par l'équipement de restitution audio 15.

Il se peut que l'utilisateur appuie sur une touche de l'interface de navigation 1 pour demander une action (par exemple un changement de chaine). Un signal de commande est alors transmis 32 aux moyens de traitement qui traitent ledit signal de sorte à générer 33 et à encoder 34 un signal « retour sonore ». Ce signal est ensuite transmis 35 à l'équipement de restitution audio 15 par liaison sans fil puis décodé 36 par ledit équipement de restitution audio 15. Le signal « retour sonore » est alors mixé 37 au signal « son multimédia » afin d'être conjointement diffusé par l'équipement de restitution audio 15. L'équipement décodeur 11 est par ailleurs configuré pour que le signal « retour sonore » soit restitué avec une latence « retour sonore » moins importante que la latence « son multimédia » du signal « son multimédia ». La latence retour sonore est définie ici par l'intervalle de temps entre l'instant où les moyens de traitement réceptionnent le signal de commande de l'interface de navigation et l'instant où un retour sonore est diffusé par l'équipement de restitution audio 15 ; la latence son multimédia est définie ici par l'intervalle entre l'instant où les moyens de traitement réceptionnent le flux d'entrée et l'instant où un son multimédia associé audit flux d'entrée est diffusé par l'équipement de restitution audio 15.

Les moyens de traitement gèrent le retour sonore de sorte à avoir une première liaison audio 16 à faible latence mais en contrepartie de qualité limitée, sans possibilité de retransmission ou avec une possibilité de retransmission faible. La latence retour sonore est par exemple inférieure à 50 millisecondes et de préférence inférieure à 30 millisecondes.

A l'opposé les moyens de traitement gèrent la diffusion du son multimédia de sorte à avoir une deuxième liaison audio 17 de meilleure qualité (en termes de fréquence d'échantillonnage, de dimensions de la liaison ...) et à garantir une meilleure retransmission grâce au recours à une latence son multimédia plus importante. La latence son multimédia est par exemple comprise entre 100 millisecondes et 2 secondes et typiquement entre 500 millisecondes et 1 seconde.

On retient néanmoins que la latence retour sonore ne peut être inférieure aux latences incompressibles de transmission des signaux entre les différents équipements et de traitement des signaux au sein de l'équipement de restitution audio 15 et de l'équipement de restitution audio/vidéo 13.

Ainsi la latence retour sonore minimale « Latence_audio_low_latency » est définie par :

$$\text{Latence\_audio\_low\_latency} = \min ( (\text{délai\_transmission\_signal\_vidéo} + \text{délai\_affichage\_vidéo}) , (\text{délai\_transmission\_audio} + \text{délai\_décodage\_audio} + \text{buffer\_audio\_low\_latency}) )$$

avec :

- délai_transmission_signal_vidéo : délai pour envoyer et recevoir un signal vidéo par le canal de communication 10 entre l'équipement décodeur 11 et l'équipement de restitution audio/vidéo 13;
- délai_affichage_vidéo : délai d'affichage interne de l'équipement de restitution audio/vidéo 13 ;
- délai_transmission_audio : délai pour envoyer et recevoir un signal de retour sonore par la première liaison audio 16 entre l'équipement décodeur 11 et l'équipement de restitution audio 15 ;
- délai_décodage_audio : délai de décodage du signal audio par l'équipement de restitution audio 15 ;
- buffer_audio_low_latency : mémoire tampon de valeur prédéterminée pour la première liaison audio 16 ;

*(étant entendu que certaines des valeurs précitées peuvent être très faibles, voire quasiment nulles, voire nulles, dans certains cas).*

On a par exemple « buffer_audio_low_latency » inférieur à 30 millisecondes, typiquement inférieur à 5 millisecondes. De la même manière, la latence son multimédia ne peut être inférieure aux latences incompressibles de transmission des signaux entre les différents équipements et de traitement des signaux au sein de l'équipement de restitution audio 15 et de l'équipement de restitution audio/vidéo 13.

Ainsi la latence son multimédia minimale « Latence_audio_high_latency » est définie par : Latence_audio_high_latency = min ( (délai_transmission_signal_vidéo + délai_affichage_vidéo), (délai_transmission_audio + délai_décodage_audio + buffer_audio_high_latency) ) avec buffer_audio_high_latency : mémoire tampon de valeur prédéterminée pour la deuxième liaison audio 17 ; *(étant entendu que certaines des valeurs précitées peuvent être très faibles, voire quasiment nulles, voire nulles dans certains cas).*

On a par exemple « buffer_audio_high_latency » compris entre 0.5 et plusieurs secondes, préférentiellement entre 0.5 et 1.5 secondes et par exemple entre 0.5 et 1 seconde. Sachant que « buffer_audio_high_latency » est supérieur à « buffer_audio_low_latency », on a nécessairement Latence_audio_low_latency strictement inférieure à Latence_audio_high_latency.

On obtient bien deux liaisons audio 16, 17 avec des latences différentes qui passent par un même canal de communication 12.

La transmission de signaux audio via ce canal de communication 12 commun pourra être réalisée à partir de tout protocole connu (http ; RTP/RTSP ; UDP ...). Dans le cas présent, on utilise le même protocole pour les deux liaisons audio 16, 17.

Il faut bien entendu distinguer les mémoires tampons permettant la synchronisation des signaux son multimédia avec les signaux vidéos multimédia (basée sur une heure de présentation visée), des mémoires tampons « buffer_audio_low_latency » et « buffer_audio_high_latency » (non illustrées à la figure 2 mais agencées dans les moyens de traitement) permettant de fournir des latences différentes aux signaux retours sonores et aux signaux son multimédia. Ainsi la mise en mémoire tampon pour la synchronisation audio/vidéo se fait au niveau de l'équipement de restitution audio alors que celle liée à la dissociation retour/sonore - rendu multimédia se fait au niveau des moyens de traitement.

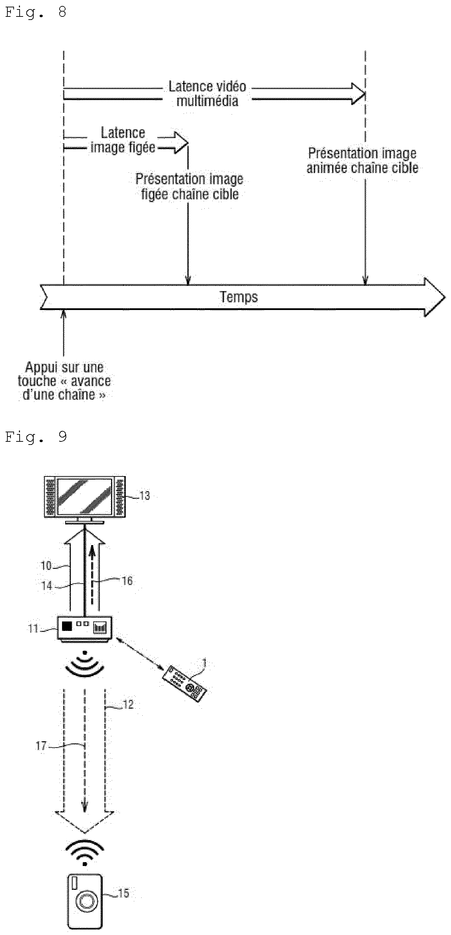

Un deuxième mode de réalisation va être à présent décrit en référence à la figure 9. Ce deuxième mode de réalisation est identique au premier mode de réalisation à la différence que l'équipement de restitution audio 15 ne diffuse que le son multimédia. Le retour sonore est ainsi diffusé par exemple directement par l'équipement de restitution audio/vidéo 13 ou bien encore par un deuxième équipement de restitution audio distinct du premier équipement de restitution audio (par exemple une deuxième enceinte, par l'interface de navigation directement, etc.). La première liaison audio 16 peut prendre différentes natures « physiques » (par exemple en HDMI, *Toslink*, RCA, S/PIDF, sortie audio analogique etc.) et/ou utiliser différents protocoles « informatiques » (par exemple en *Bluetooth*, UPnP, *Airplay, Chromecast,* Wifi etc) . On va à présent décrit plus en détail ce deuxième mode de réalisation.

L'installation selon le deuxième mode de réalisation est une installation multimédia comprenant un équipement décodeur 11 relié ici à un équipement de restitution vidéo, qui est ici en réalité un équipement de restitution audio/vidéo 13, et à un équipement de restitution audio 15. L'équipement de restitution audio 15 n'est pas compris dans l'équipement décodeur 11 : ils forment deux entités distinctes en communication sans fil.

L'équipement décodeur 11 est ici un boîtier décodeur, l'équipement de restitution audio/vidéo 13 est une télévision, et l'équipement de restitution audio 15 est une enceinte externe.

En service, l'équipement décodeur 11 acquiert au niveau d'une interface de communication de l'équipement décodeur 11, un flux multimédia d'entrée qui peut provenir d'un ou de plusieurs réseaux de diffusion. Les réseaux de diffusion peuvent être de tout type. Par exemple, le réseau de diffusion est un réseau de télévision par satellite, et l'équipement décodeur 11 reçoit le flux multimédia d'entrée à travers une antenne parabolique. En variante, le réseau de diffusion est une connexion Internet et l'équipement décodeur 11 reçoit le flux multimédia d'entrée à travers ladite connexion Internet. Selon une autre variante, le réseau de diffusion est un réseau de télévision numérique terrestre (TNT) ou un réseau de télévision par câble. De manière globale, le réseau de diffusion peut être de source diverse : satellite, câble, IP, TNT (réseau de Télévision Numérique Terrestre), flux vidéo stocké localement, etc. De façon particulière, le flux multimédia d'entrée réceptionné par l'équipement décodeur 11 comporte des métadonnées et un flux audio/vidéo d'entrée comprenant une partie audio et une partie vidéo qui sont synchronisées entre elles.

L'équipement décodeur 11 comporte des moyens de traitement permettant entre autres de traiter le flux d'entrée audio/vidéo.

L'équipement de restitution audio/vidéo 13 est connecté à une sortie audio/vidéo de l'équipement décodeur 11. L'équipement de restitution audio 15 est connecté à une sortie audio de l'équipement décodeur 11.

Par « sortie audio/vidéo », on entend une sortie sur laquelle l'équipement décodeur 11 applique au moins un signal audio/vidéo pour mettre en oeuvre une restitution audio et une restitution vidéo via (au moins) un équipement de restitution audio/vidéo 13 (ici la télévision). Par « sortie audio », on entend une sortie sur laquelle l'équipement décodeur 11 applique au moins un signal audio pour mettre en oeuvre une restitution audio via (au moins) un équipement de restitution audio 15 (ici l'enceinte externe).

Dans ce deuxième mode de réalisation, sur la sortie audio, l'équipement décodeur 11 transmet via une deuxième liaison audio 17 un premier signal audio.

En conséquence, de manière correspondante, l'équipement de restitution audio 15 comporte des moyens de traitement qui lui sont propres pour traiter le deuxième signal audio 17 réceptionné au niveau d'une interface de communication de l'équipement de restitution audio 15.

Par ailleurs, l'équipement décodeur 11 transmet via une unique liaison audio/vidéo 14 un signal audio/vidéo à l'équipement de restitution audio/vidéo 13 et via une première liaison audio 16, un premier signal audio.

Le canal de communication 10, par lequel circule la liaison audio/vidéo 14 mais également la première liaison audio 16, entre l'équipement décodeur 11 et l'équipement de restitution audio/vidéo 13 peut être filaire ou sans fil. Tout type de technologie peut être utilisé pour réaliser ce canal : optique, radioélectrique, etc. Le canal peut ainsi avoir différentes natures « physiques » (par exemple en HDMI, *Toslink,* RCA, etc.) et/ou utiliser différents protocoles « informatiques » (par exemple en *Bluetooth,* UPnP, *Airplay, Chromecast,* Wifi, etc).

Le canal de communication 12 entre l'équipement décodeur 11 et l'équipement de restitution audio 15, par lequel circule la deuxième liaison audio 17, est non filaire. Tout type de technologie peut être utilisé pour réaliser ce canal 12: optique, radioélectrique, etc. Le canal 12 peut ainsi utiliser différents protocoles « informatiques » (par exemple en *Bluetooth,* UPnP, *Airplay, Chromecast,* Wifi, etc) .

Ainsi et selon une option non limitative, l'équipement de restitution audio/vidéo 13 est en relation HDMI (i.e. le canal de communication 10 est un câble HDMI) avec l'équipement décodeur 11 et l'équipement de restitution audio 15 est connecté par un réseau local à l'équipement décodeur 11. Le réseau local est par exemple un réseau sans fil de type Wi-Fi (i.e. le canal de communication 12 est un lien Wi-Fi). Selon une autre variante, le réseau local comporte un routeur Wi-Fi, l'équipement décodeur 11 est relié audit routeur Wi-Fi par une connexion filaire de type Ethernet, et le routeur Wi-Fi est connecté à l'équipement de restitution audio 15 par une connexion sans fil de type Wi-Fi.

On retient donc que dans l'installation, deux liaisons audio 16, 17 différentes circulent (entre l'équipement décodeur 11 et l'équipement de restitution audio 15 d'une part et entre l'équipement décodeur 11 et l'équipement de restitution audio/vidéo 13 d'autre part). En outre, deux liaisons 14 et 16 différentes (audio et audio/vidéo) passent par le même canal de communication 10.

On a bien toujours une installation avec seulement deux canaux de communication 10, 12 et deux liaisons audio 16, 17 avec des latences différentes.

On va à présent s'attacher à décrire le fonctionnement de l'équipement décodeur 11.

En ce qui concerne le rendu audio, l'équipement décodeur 11 distingue deux parties :

- le retour sonore lié aux demandes d'actions requises par l'utilisateur via une interface de navigation 1 ;
- le son multimédia pour la restitution du flux audio d'entrée.

L'interface de navigation 1 est dans le cas présent une télécommande mais cela pourrait être également une manette, un joystick ... Le retour sonore peut par exemple être l'émission d'un bip à chaque fois que l'utilisateur appuie sur l'une des touches de la télécommande.

En service l'équipement décodeur 11 réceptionne le flux d'entrée audio/vidéo qui est ensuite découpé en un signal audio et un signal vidéo. Le signal vidéo est décodé puis le signal correspondant « vidéo multimédia » est mis en mémoire tampon dans l'équipement décodeur 11. En revanche, le signal audio est décodé en un signal « son multimédia » puis ré-encodé et transmis à l'équipement de restitution audio 15 par liaison sans fil avant d'être de nouveau décodé par ledit équipement de restitution audio 15 puis mis en mémoire tampon dans l'équipement de restitution audio 15. Afin d'assurer une synchronisation entre le signal « vidéo multimédia » et le signal « son multimédia », les données en mémoire tampon sont déchargées simultanément à une heure de présentation donnée : le signal « vidéo multimédia » est transmis à l'équipement de restitution audio/vidéo 13 pour affichage et le signal « son multimédia » est diffusé par l'équipement de restitution audio 15.

Il se peut que l'utilisateur appuie sur une touche de la télécommande pour demander une action (par exemple un changement de chaine). Un signal de commande est alors transmis aux moyens de traitement qui traitent ledit signal de sorte à générer un signal « retour sonore ». Ce signal est ensuite transmis à l'équipement de restitution audio 15 pour être diffusé par l'équipement de restitution audio 15.

L'équipement décodeur 11 est par ailleurs configuré pour que le signal « retour sonore » soit restitué avec une latence « retour sonore » moins importante que la latence « son multimédia » du signal « son multimédia ». La latence retour sonore est définie ici par l'intervalle de temps entre l'instant où les moyens de traitement réceptionnent le signal de commande de l'interface de navigation 1 et l'instant où un retour sonore est diffusé par l'équipement de restitution audio/vidéo 13; la latence son multimédia est définie ici par l'intervalle entre l'instant où les moyens de traitement réceptionnent le flux d'entrée et l'instant où un son multimédia associé audit flux d'entrée est diffusé par l'équipement de restitution audio 15.

Les moyens de traitement gèrent le retour sonore de sorte à avoir une première liaison audio 16 à faible latence mais en contrepartie de qualité limitée, sans possibilité de retransmission ou avec une possibilité de retransmission faible. La latence retour sonore est par exemple inférieure à 50 millisecondes et de préférence inférieure à 30 millisecondes.

A l'opposé les moyens de traitement gèrent la diffusion du son multimédia de sorte à avoir une deuxième liaison audio 17 de meilleure qualité (en termes de fréquence d'échantillonnage, de dimensions de la liaison ...) et à garantir une meilleure retransmission grâce au recours à une latence son multimédia plus importante. La latence son multimédia est par exemple comprise entre 100 millisecondes et 2 secondes et typiquement entre 500 millisecondes et 1 seconde.

On retient néanmoins que la latence retour sonore ne peut être inférieure aux latences incompressibles de transmissions des signaux entre les différents équipements et de traitement des signaux au sein de l'équipement de restitution audio 15 et de l'équipement de restitution audio/vidéo 13.

Ainsi la latence retour sonore minimale « Latence_audio_low_latency » est définie par :

$$Latence\_audio\_low\_latency = min ($$
$$(délai\_transmission\_signal\_vidéo + délai\_affichage\_vidéo)$$
$$, (délai\_transmission\_audio + délai\_décodage\_audio +$$
$$buffer\_audio\_low\_latency) )$$

avec :

- délai_transmission_signal_vidéo : délai pour envoyer et recevoir un signal vidéo par le canal de communication 10 entre l'équipement décodeur 11 et l'équipement de restitution audio/vidéo 13 ;
- délai_affichage_vidéo : délai d'affichage interne de l'équipement de restitution audio/vidéo 13 ;
- délai_transmission_audio : délai pour envoyer et recevoir un signal de retour sonore par la première liaison audio 16 entre l'équipement décodeur 11 et l'équipement de restitution audio/vidéo 13 ;
- délai_décodage_audio : délai de décodage du signal audio par l'équipement de restitution audio/vidéo 13 ;
- buffer_audio_low_latency : mémoire tampon de valeur prédéterminée pour la première liaison audio 16 ;

*(étant entendu que certaines des valeurs précitées peuvent être très faibles, voire quasiment nulles, voire nulles, dans certains cas).*

On a par exemple « buffer_audio_low_latency » inférieur à 30 millisecondes, typiquement inférieur à 5 millisecondes.

De la même manière, la latence son multimédia ne peut être inférieure aux latences incompressibles de transmissions des signaux entre les différents équipements et de traitement des signaux au sein de l'équipement de restitution audio 15 et de l'équipement de restitution audio/vidéo 13.

Ainsi la latence son multimédia minimale « Latence_audio_high_latency » est définie par :

$$Latence\_audio\_high\_latency = min ($$
$$(délai\_transmission\_signal\_vidéo + délai\_affichage\_vidéo)$$
$$, (délai\_transmission\_audio + délai\_décodage\_audio +$$
$$buffer\_audio\_high\_latency) )$$

avec buffer_audio_high_latency : mémoire tampon de valeur prédéterminée pour la deuxième liaison audio 17 ;
*(étant entendu que certaines des valeurs précitées peuvent être très faibles, voire quasiment nulles, voire nulles dans certains cas).*

On a par exemple « buffer_audio_high_latency » compris entre 0.5 et plusieurs secondes, préférentiellement entre 0.5 et 1.5 secondes et par exemple entre 0.5 et 1 seconde. Sachant que « buffer_audio_high_latency » est supérieur à buffer_audio_low_latency, on a nécessairement Latence_audio_low_latency strictement inférieur à Latence_audio_high_latency.

On obtient bien deux liaisons audio 16, 17 avec des latences différentes qui passent par des canaux de communication différents 10, 12.

Il faut bien entendu distinguer les mémoires tampons permettant la synchronisation des signaux son multimédia avec les signaux vidéos multimédia (basée sur une heure de présentation visée) des mémoires tampons « buffer_audio_low_latency » et « buffer_audio_high_latency » permettant de fournir des latences différentes aux signaux retours sonores et aux signaux son multimédia. Ainsi la mise en mémoire tampon pour la synchronisation audio/vidéo se fait au niveau de l'équipement de restitution audio 15 alors que celle liée à la dissociation retour/sonore - rendu multimédia se fait au niveau des moyens de traitement.

On vient ainsi de décrire une installation et en particulier un équipement décodeur 11 selon deux modes de réalisation distincts mais permettant à chaque fois d'offrir une première latence relativement faible pour la fonction « auditory feedback » et une deuxième latence plus importante assurant une meilleure robustesse pour la diffusion du son multimédia grâce au découpage du rendu sonore en deux parties.

Chaque mode de réalisation précité présente des spécificités.

*Premier mode de réalisation*

L'équipement de restitution audio 15 doit être configuré pour pouvoir gérer le fait d'être associé à l'équipement décodeur 11 via un seul canal de communication 12 dans lequel circule deux liaisons audio 16, 17 distinctes.

En revanche, l'utilisateur n'est pas surpris par le rendu sonore.

*Deuxième mode de réalisation*

L'équipement de restitution audio 15 n'a pas besoin de présenter une configuration particulière. On peut donc utiliser tout équipement de restitution audio du commerce pour mettre en oeuvre l'invention.

En revanche, l'utilisateur peut être surpris par le rendu sonore du fait qu'il sera diffusé par un autre équipement que l'équipement de restitution audio 15 qui diffusera pourtant le son multimédia.

Quel que soit le mode de réalisation envisagé, le retour sonore peut également être associé à un retour visuel. Ainsi, en fonction de la demande d'action requise par l'utilisateur via l'interface de navigation 1, des informations correspondantes vont être affichées par l'équipement de restitution audio/vidéo 13. Par exemple si l'utilisateur demande un changement de chaine, les informations affichées pourront être de type : nom de la nouvelle chaîne visée, programme actuellement diffusé sur ladite chaine ...

En référence à la figure 3, les moyens de traitement sont donc configurés pour transmettre via le canal de communication audio/vidéo 10 un unique signal vidéo composé à la fois des signaux vidéo multimédia (issus du flux d'entrée vidéo/audio) et des signaux de retour visuel. Dans l'installation vont donc circuler des signaux de retour visuel synchronisés avec les signaux de retour sonore et des signaux vidéos multimédia synchronisés avec les signaux son multimédia. En conséquence du fait des latences différentes entre les signaux son multimédia et les signaux retour sonore ainsi que de la synchronisation audio/vidéo pour la navigation d'une part et le flux multimédia d'autre part, les signaux vidéo multimédia seront restitués avec une latence supérieure à ceux du retour visuel.

Ainsi, sans traitement supplémentaire de la part de l'équipement décodeur 11, le retour visuel et la vidéo vont être désynchronisés ce qui peut être perturbant pour un utilisateur.

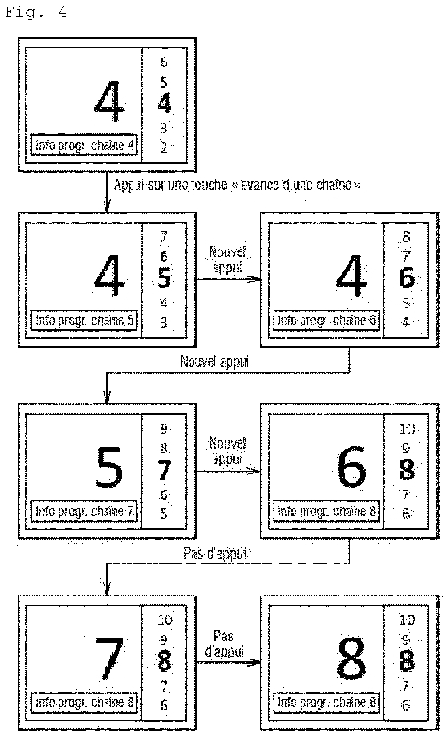

Par exemple dans le cas d'un zapping, comme illustré à la figure 4, le changement de vidéo d'une chaine à une autre va être plus long que le changement d'informations présentées par le retour visuel (nom de la chaine, nom du programme actuellement visualisable sur ladite chaine, liste des chaînes avec mise en évidence du numéro de la chaine commandée ...) .

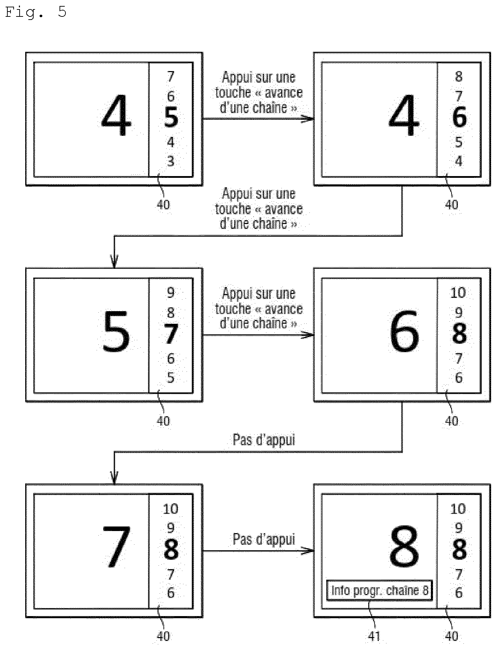

En conséquence il va y avoir un décalage entre le retour visuel et la vidéo de sorte que les informations présentées ne correspondront pas à la chaine simultanément affichée. Afin d'éviter un décalage retour visuel/vidéo multimédia, l'équipement décodeur 11 est configuré selon une première variante éclairée par la figure 5.

Dans cette première variante, les moyens de traitement désynchronisent le signal vidéo retour visuel du signal retour sonore afin de le synchroniser avec le signal vidéo multimédia.

Ainsi, la latence pour l'affichage des éléments du retour visuel est la même que celle pour l'affichage de la vidéo multimédia.

On attend ainsi que la vidéo d'une chaine commandée soit réellement diffusée par l'équipement de restitution audio/vidéo pour afficher simultanément les informations correspondantes. On a ainsi une corrélation chaine affichée - information de chaine affichée ce qui limite un risque de confusion par l'utilisateur.

Par ailleurs on peut désynchroniser totalement le signal vidéo retour visuel du signal retour sonore afin de le synchroniser avec le signal vidéo multimédia ou bien le désynchroniser seulement en partie : dans ce cas une partie des informations sera affichée simultanément avec le rendu sonore et une partie sera affichée que lorsque la vidéo correspondante le sera également.

Par exemple on peut avoir sur le côté de l'écran une liste des chaînes avec mise en évidence du numéro de la chaine commandée 40 qui reste synchronisée avec le signal de retour sonore afin que l'utilisateur visualise bien que sa demande d'action a été prise en compte. En revanche d'autres informations 41 comme le nom de la chaine, des indications sur le programme actuellement diffusé par la chaine ... ne seront affichées que lorsque la vidéo correspondante sera également affichée.

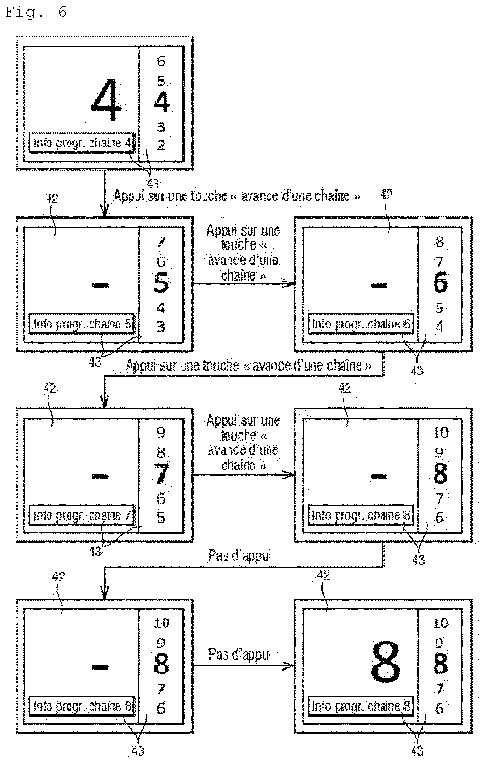

Dans une deuxième variante illustrée à la figure 6, pour éviter le décalage retour visuel/vidéo multimédia, les moyens de traitement conservent la synchronisation retour sonore/retour visuel mais affiche un écran de transition 42 en place du signal vidéo multimédia le temps que l'utilisateur cesse d'agir sur l'interface de navigation. Par exemple, en cas de zapping, l'écran de transition 42 est affiché jusqu'à stabilisation sur une chaine. On considère que l'on est stabilisé au bout d'un intervalle de temps $\Delta t$ depuis le dernier signal de commande au moins égal à « délai_transmission_signal_vidéo + délai_affichage_vidéo ».

A partir de là les moyens de traitement lancent la vidéo de la chaine correspondante.

L'écran de transition 42 peut être un écran de couleur, un écran noir, un écran avec un logo (tel que le logo de la chaine), un écran animé ... et de manière générale tout fond d'écran temporaire.

En conséquence, l'utilisateur n'a ainsi accès qu'aux informations 43 fournies par le retour visuel qui ne sont donc plus en conflit avec l'affichage de la vidéo multimédia. Ceci limite également un risque de confusion par l'utilisateur.

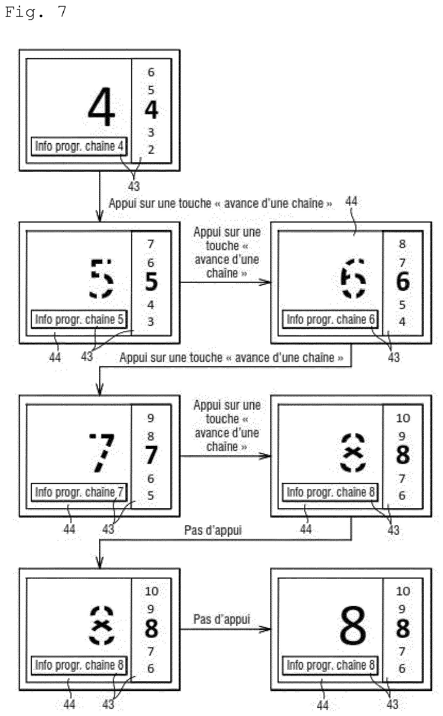

Les figures 7 et 8 illustrent une troisième variante pour limiter le décalage retour visuel/vidéo multimédia.

Dans cette troisième variante, les moyens de traitement conservent la synchronisation retour sonore/retour visuel mais affichent une image figée 44 du signal vidéo multimédia le temps que l'utilisateur cesse d'agir sur l'interface de navigation. En effet, dans les faits, l'équipement décodeur 11 a déjà accès à la vidéo requise par l'utilisateur mais c'est la latence haute voulue pour le rendu son et vidéo multimédia qui entraîne le décalage retour visuel/vidéo multimédia. Pour limiter la confusion de l'utilisateur, les moyens de traitement peuvent donc afficher une image figée 44 très rapidement si on le souhaite (au délai de latence de décodage de la vidéo et des latences délai_transmission_signal_vidéo et délai_affichage_vidéo incompressibles près).

Par exemple, en cas de zapping, l'image figée 44 est affichée jusqu'à stabilisation sur une chaine. On considère que l'on est stabilisé au bout d'un intervalle de temps $\Delta t$ depuis le dernier signal de commande au moins égal « à délai_transmission_signal_vidéo + délai_affichage_vidéo ».

En conséquence, l'utilisateur a ainsi accès aux informations 43 fournies par le retour visuel qui sont en accord avec l'image figée 44 affichée par l'équipement de restitution audio/vidéo 13. Ceci limite également un risque de confusion par l'utilisateur.

Bien entendu, l'invention n'est pas limitée aux modes de réalisation décrits ci-dessus et on peut y apporter des variantes de réalisation sans sortir du cadre de l'invention.

Ainsi, bien qu'ici l'équipement décodeur soit un boîtier décodeur, l'équipement décodeur pourra être tout équipement capable de réaliser un décodage audio/vidéo, tel qu'un décodeur vidéonumérique et par exemple une console de jeu, un ordinateur, une smart-TV, une tablette numérique, un téléphone portable, un décodeur de télévision numérique, un boîtier décodeur de type STB ou dongle HDMI, etc.

Bien qu'ici l'équipement de restitution vidéo soit un équipement de restitution audio/vidéo cela pourra être tout autre type d'équipement de restitution audio/vidéo ou uniquement vidéo. L'équipement pourra ainsi être une télévision, un vidéoprojecteur, une tablette, un téléphone portable, etc. L'équipement de restitution vidéo pourra ainsi être d'une seule entité avec l'équipement décodeur. De même, bien qu'ici l'équipement de restitution audio soit une enceinte connectée externe, ceci pourrait être un autre équipement muni d'un haut-parleur, par exemple une barre de son, un système audio relié à un bridge Wi-Fi/audio ...

On pourrait avoir un nombre plus important d'équipements de restitution vidéo et/ou d'équipements de restitution audio (en particulier plus d'enceintes) et/ou d'équipements décodeurs que ce qui a été indiqué.

Le canal de communication entre l'équipement décodeur et l'équipement de restitution audio pourra être différent de ce qui a été indiqué et être par exemple de type Bluetooth. En cas de liaison WiFi, celle-ci pourra être de type Ad Hoc ou de type infrastructure.

Bien qu'ici on utilise des protocoles identiques pour les deux liaisons audio, on pourra utiliser des protocoles différents pour chacune des deux liaisons audio. On pourra par exemple utiliser un protocole UDP pour la liaison retour sonore et un protocole http pour la liaison audio/vidéo multimédia. De même on pourra employer des formats de codage/décodage de signaux, identiques ou différents entre les deux liaisons audio. Si le protocole de transmission et/ou le format de codage audio est différent entre les deux liaisons audio il est possible que les valeurs délai_transmission_audio et délai_décodage_audio soient différentes d'une liaison audio à une autre. Par exemple un protocole UDP / RTP aurait une plus faible latence qu'un protocole http, un codage sonore PCM ou ADPCM aurait une plus faible latence de décodage qu'un codage MPEG-4 AAC ou Opus ...

Bien qu'ici on ait toujours deux canaux de communication pour faire passer les trois liaisons (les deux liaisons audio et la liaison vidéo/audio) dans le cas du deuxième mode de réalisation on pourra envisager d'avoir deux canaux de communication entre l'équipement de restitution vidéo et l'équipement décodeur pour le passage respectivement de la première liaison audio et de la liaison vidéo (ou audio/vidéo) ainsi qu'un seul canal de communication entre l'équipement de restitution audio et l'équipement décodeur.

Par ailleurs bien qu'ici les variantes de limitation du décalage retour visuel / vidéo multimédia soient décrites en référence à un changement de chaine, on pourra bien entendu mettre en place les variantes précitées pour d'autres types de demandes d'actions de la part de l'utilisateur comme par exemple en cas de demande d'une lecture vidéo (lecture VOD, lecture d'un flux vidéo réseau, lecture d'un enregistrement PVR....). Par exemple on pourra présenter au plus tôt une image fixe issue du décodage de la vidéo, avant de passer à la vidéo animée une fois le délai de latence vidéo multimédia atteint ou bien présenter un écran de transition.

En outre bien qu'ici le retour sonore soit lié à une demande d'action de l'utilisateur, le retour sonore généré par l'équipement décodeur pourra avoir une autre origine. Par exemple le retour sonore pourra être généré dans le cadre d'une application de télévision interactive ou bien afin d'assurer une notification (par exemple volume sonore trop important, temps de visualisation trop important ...). De manière générale, le retour sonore pourra être tout son généré par l'équipement décodeur.

Par ailleurs bien qu'ici le flux d'entrée audio/vidéo provienne de l'extérieur et soit réceptionné par l'interface de communication pour être directement traité par l'équipement décodeur, le flux d'entrée audio/vidéo pourra être préalablement réceptionné par l'interface de communication pour être enregistré en local dans l'équipement décodeur. L'équipement décodeur traitera ensuite le flux d'entrée audio/vidéo qui a été enregistré en local.

Bien qu'ici les moyens de traitement soient configurés pour transmettre via un seul canal de communication audio/vidéo, un unique signal vidéo composé à la fois des signaux vidéo multimédia (issus du flux d'entrée audio/vidéo) et des signaux de retour visuel, les moyens de traitement pourront transmettre deux types de signaux vidéos via un même canal de communication (les signaux vidéo multimédia et les signaux de retour visuel) : ce sera alors l'équipement de restitution audio/vidéo qui traitera les deux types de signaux pour générer un seul signal vidéo à afficher.

**Revendications**

**1.** Equipement décodeur (11) comprenant :

- une première sortie pouvant être reliée à un équipement de restitution audio (15),
- une deuxième sortie pouvant être reliée à un équipement de restitution vidéo (13),
l'équipement décodeur étant **caractérisé en ce qu'**il comporte également
- des moyens de traitement configurés pour transmettre via une première liaison audio (17) de la première sortie un premier signal audio issu d'un flux d'entrée audio/vidéo réceptionné par l'équipement décodeur et, via une deuxième liaison audio (16) de la première sortie ou de la deuxième sortie, un deuxième signal audio lié à au moins un son généré par l'équipement décodeur dans un but de retour sonore afin d'interagir avec un utilisateur, le son généré par l'équipement décodeur étant distinct d'un son issu du flux d'entrée audio/vidéo, la première liaison présentant des premières caractéristiques conférant au premier signal audio une première latence et la deuxième liaison présentant des deuxièmes caractéristiques conférant au deuxième signal audio une deuxième latence inférieure à la première latence, l'équipement décodeur communiquant en service sans fil avec l'équipement de restitution audio, la première latence étant définie par un intervalle de temps entre l'instant où les moyens de traitement réceptionnent le flux d'entrée audio/vidéo et l'instant où un son multimédia lié audit flux d'entrée audio/vidéo est diffusé par l'équipement de restitution audio, la deuxième latence étant définie par un intervalle de temps entre l'instant où les moyens de traitement réceptionnent un ordre de génération d'un son par l'équipement décodeur et l'instant où ledit son est diffusé par l'équipement de restitution audio ou l'équipement de restitution audio/vidéo.

**2.** Equipement décodeur selon la revendication 1, dans lequel les moyens de traitement sont configurés pour transmettre via la première liaison audio (17) de la première sortie, le premier signal audio, et via la deuxième liaison audio (16) de la même première sortie le deuxième signal audio.

**3.** Equipement décodeur selon la revendication 1, dans lequel les moyens de traitement sont configurés pour transmettre via la deuxième liaison audio (16) de la deuxième sortie, le deuxième signal audio.

**4.** Equipement décodeur selon l'une des revendications précédentes, dans lequel les deux liaisons audio (16, 17) sont configurées selon des protocoles différents.

**5.** Equipement décodeur selon l'une des revendications précédentes, dans lequel les deux liaisons audio (16,17) sont configurées par des formats différents de codage/décodage de signaux transitant par eux.

**6.** Equipement selon l'une des revendications précédentes, dans lequel la deuxième latence est inférieure à 50 millisecondes.

**7.** Equipement selon la revendication 6, dans lequel la deuxième latence est inférieure à 30 millisecondes.

**8.** Equipement selon l'une des revendications précédentes, configuré pour générer un signal vidéo lié à une demande d'action d'un utilisateur.

**9.** Equipement selon la revendication 8, configuré pour que le signal vidéo soit désynchronisé en partie ou en totalité du deuxième signal audio.

**10.** Equipement selon l'une des revendications précédentes, configuré pour afficher un écran de transition durant un temps de chargement d'un signal vidéo.

**11.** Equipement selon la revendication 10, dans lequel l'écran de transition est une image figée (44) issue du signal vidéo.

**12.** Equipement de restitution audio configuré pour être raccordé à la première sortie d'un équipement décodeur selon la revendication 2 et pour traiter les signaux provenant des deux liaisons audio transmis par ledit équipement décodeur.

**13.** Installation comprenant au moins un équipement décodeur selon la revendication 2 et un équipement de restitution audio selon la revendication 12.

**14.** Procédé de gestion d'une double liaison sonore mis en oeuvre par un équipement décodeur selon l'une des revendications 1 à 11.

**15.** Programme d'ordinateur comprenant des instructions qui conduisent l'équipement décodeur selon l'une des revendications 1 à 11 à exécuter le procédé selon la revendication 14.

**16.** Support d'enregistrement lisible par ordinateur, sur lequel est enregistré le programme d'ordinateur selon la revendication 15.

**Patentansprüche**

**1.** Decodergerät (11), umfassend:

- einen ersten Ausgang, der mit einem Audiowiedergabegerät (15) verbunden werden kann,
- einen zweiten Ausgang, der mit einem Videowiedergabegerät (13) verbunden werden kann,
wobei das Decodergerät **dadurch gekennzeichnet ist, dass** es ferner umfasst

- Verarbeitungsmittel, die ausgebildet sind, über eine erste Audioverbindung (17) des ersten Ausgangs ein erstes Audiosignal zu übertragen, das aus einem Audio/Video-Eingangsstrom stammt, der von dem Decodergerät empfangen wird, und über eine zweite Audioverbindung (16) des ersten Ausgangs oder des zweiten Ausgangs ein zweites Audiosignal zu übertragen, das mit mindestens einem Ton verbunden ist, der von dem Decodergerät zum Zweck der akustischen Rückmeldung erzeugt wird, um mit einem Nutzer zu interagieren, wobei sich der von dem Decodergerät erzeugte Ton von einem Ton unterscheidet, der von dem Audio/Video-Eingangsstrom stammt, wobei die erste Verbindung erste Merkmale aufweist, die dem ersten Audiosignal eine erste Latenz verleihen, und die zweite Verbindung zweite Merkmale aufweist, die dem zweiten Audiosignal eine zweite Latenz verleihen, die geringer als die erste Latenz ist,

wobei das Decodergerät im Betrieb drahtlos mit dem Audiowiedergabegerät kommuniziert,
wobei die erste Latenz durch ein Zeitintervall zwischen dem Zeitpunkt, zu dem die Verarbeitungsmittel den Audio/Video-Eingangsstrom empfangen, und dem Zeitpunkt definiert ist, zu dem ein Multimediaton, der mit dem genannten Audio/Video-Eingangsstrom verbunden ist, von dem Audiowiedergabegerät abgespielt wird,
wobei die zweite Latenz durch ein Zeitintervall zwischen dem Zeitpunkt, zu dem die Verarbeitungsmittel einen Befehl zur Erzeugung eines Tons durch das Decodergerät empfangen, und dem Zeitpunkt definiert ist, zu dem der genannte Ton von dem Audiowiedergerät oder dem Audio/Videowiedergabegerät abgespielt wird.

**2.** Decodergerät nach Anspruch 1, bei dem die Verarbeitungsmittel ausgebildet sind, über die erste Audioverbindung (17) des ersten Ausgangs das erste Audiosignal und über die zweite Audioverbindung (16) desselben ersten Ausgangs das zweite Audiosignal zu übertragen.

**3.** Decodergerät nach Anspruch 1, bei dem die Verarbeitungsmittel ausgebildet sind, über die zweite Audioverbindung (16) des zweiten Ausgangs das zweite Audiosignal zu übertragen.

**4.** Decodergerät nach einem der vorhergehenden Ansprüche, bei dem die beiden Audioverbindungen (16, 17) gemäß unterschiedlichen Protokollen ausgebildet sind.

**5.** Decodergerät nach einem der vorhergehenden Ansprüche, bei dem die beiden Audioverbindungen (16, 17) mit unterschiedlichen Kodierungs-/Dekodierungsformaten für die durch sie hindurchgehenden Signale ausgebildet sind.

**6.** Gerät nach einem der vorhergehenden Ansprüche, bei dem die zweite Latenz geringer als 50 Millisekunden ist.

**7.** Gerät nach Anspruch 6, bei dem die zweite Latenz geringer als 30 Millisekunden ist.

**8.** Gerät nach einem der vorhergehenden Ansprüche, das ausgebildet ist, ein Videosignal zu erzeugen, das mit einer Handlungsanfrage eines Nutzers verbunden ist.

**9.** Gerät nach Anspruch 8, das ausgebildet ist, damit das Videosignal in Bezug auf das zweite Audiosignal teilweise oder ganz entsynchronisiert ist.

**10.** Gerät nach einem der vorhergehenden Ansprüche, das ausgebildet ist, einen Übergangsbildschirm während einer Zeit zum Laden eines Videosignals anzuzeigen.

**11.** Gerät nach Anspruch 10, bei dem der Übergangsbildschirm ein Standbild (44) ist, das aus dem Videosignal stammt.

**12.** Audiowiedergabegerät, das ausgebildet ist, an den ersten Ausgang eines Decodergeräts nach Anspruch 2 angeschlossen zu werden und die aus den beiden Audioverbindungen stammenden Signale zu verarbeiten, die von dem genannten Decodergerät übertragen werden.

**13.** Anlage, umfassend mindestens ein Decodergerät nach Anspruch 2 und ein Audiowiedergabegerät nach Anspruch 12.

**14.** Verfahren zur Verwaltung einer doppelten Tonverbindung, die von einem Decodergerät nach einem der Ansprüche 1 bis 11 eingesetzt wird.

**15.** Computerprogramm, umfassend Anweisungen, die das Decodergerät nach einem der Ansprüche 1 bis 11 veranlassen, das Verfahren nach Anspruch 14 auszuführen.

**16.** Computerlesbarer Aufzeichnungsträger, auf dem das Computerprogramm nach Anspruch 15 gespeichert ist.

**Claims**

**1.** Decoder equipment (11) comprising:

· a first output suitable for connecting to audio playback equipment (15);
· a second output suitable for connecting to video playback equipment (13);
decoder equipment being **characterized in that** it also comprises

· processor means configured to use a first audio link (17) of the first output to deliver a first audio signal coming from an incoming audio/video stream received by the decoder equipment, and to use a second audio link (16) to deliver a second audio signal associated with at least one sound generated by the decoder equipment of the first output or of the second output for the purpose of providing sound feedback so as to interact with an user, the sound generated by the decoder equipment being distinct from a sound coming from the incoming audio/video stream, the first link presenting first characteristics imparting a first latency to the first audio signal and the second link presenting second characteristics imparting a second latency, lower than the first latency, to the second audio signal,

the decoder equipment being in service in wireless communication with the audio playback equipment,
the first latency being defined by a time interval between the instant at which the processor means receive the incoming audio/video stream and the instant at which a multimedia sound associated with said audio/video stream is played by the audio playback equipment,
the second latency being defined by a time interval between the instant at which the processor means receive an order for the decoder equipment to generate a sound and the instant at which said sound is played by the audio playback equipment or by the audio/video playback equipment.

**2.** Decoder equipment according to claim 1, wherein the processor means are configured to deliver via first audio link (17) of the first output, the first audio signal, and via the second audio link (16) of the same first output, the second audio signal.

**3.** Decoder equipment according to claim 1, wherein the processor means are configured to deliver via second audio link (16) of second output, the second audio signal.

**4.** Decoder equipment according to any preceding claim, wherein the two audio links (16, 17) are configured with different protocols.

**5.** Decoder equipment according to any preceding claim, wherein the two audio links (16, 17) are configured with different coding/decoding formats for the signals conveyed by them.

**6.** Equipment according to any preceding claim, wherein the second latency is lower than 50 ms.

**7.** Equipment according to claim 6, wherein the second latency is lower than 30 ms.

**8.** Equipment according to any preceding claim, configured to generate a video signal associated with a user requesting action.

**9.** Equipment according to claim 8, configured so that the video signal is desynchronized in part or in full relative to the second audio signal.

**10.** Equipment according to any preceding claim, configured to display a transition screen during a time for loading a video signal.

**11.** Equipment according to claim 10, wherein the transition screen is a still image (44) coming from the video signal.

**12.** Audio playback equipment configured to be connected to the first output of a decoder equipment according to claim 2 and to process the signals coming from the two audio links conveyed by said decoder equipment.

**13.** An installation comprising at least decoder equipment according to claim 2 and audio playback equipment according to claim 12.

**14.** A method of managing two sound links, the method being performed by decoder equipment according to any one of claims 1 to 11.

**15.** A computer program including instructions for causing the decoder equipment according to any one of claims 1 to 11 to execute the method according to claim 14.

**16.** A computer readable storage medium on which the computer program according to claim 15 is stored.

Fig. 1

Fig. 2

Fig. 3

Vidéo multimédia

chaine 1 - programme xyz

Sortie vidéo recomposée

chaine 1 - programme xyz

Retour visuel

Fig. 4

Appui sur une touche « avance d'une chaîne »

Nouvel appui

Nouvel appui

Nouvel appui

Pas d'appui

Pas d'appui

Fig. 5

Fig. 6

Fig. 7

Fig. 8

Latence vidéo
multimédia

Latence
image figée

Présentation image
animée chaîne cible

Présentation image
figée chaîne cible

Temps

Appui sur une
touche « avance
d'une chaîne »

Fig. 9

**EP 3 840 388 B1**

## RÉFÉRENCES CITÉES DANS LA DESCRIPTION

**Documents brevets cités dans la description**

- EP 1931140 A